## Europäisches Patentamt
## European Patent Office
## Office européen des brevets

(19)

(11) Publication number: **0 129 682**
**B1**

(12) **EUROPEAN PATENT SPECIFICATION**

(45) Date of publication of patent specification: **02.09.87**

(51) Int. Cl.⁴: **G 01 T 1/20, G 01 T 1/164**

(21) Application number: **84105207.9**

(22) Date of filing: **08.05.84**

(54) Radiation detector with bonded camera optics.

(30) Priority: **24.05.83 US 497485**

(43) Date of publication of application:
**02.01.85 Bulletin 85/01**

(45) Publication of the grant of the patent:
**02.09.87 Bulletin 87/36**

(84) Designated Contracting States:
**DE FR IT NL**

(56) References cited:
**GB-A-2 049 973**
**US-A-3 087 060**
**US-A-3 752 981**

**JAPANESE JOURNAL OF APPLIED PHYSICS,
vol. 10, no. 11, November 1971, pages 1597-
1600, Tokyo, JP; S. FUKUI et al.: "Flexible
adiabatic light guide of silicon rubber"**

**THE REVIEW OF SCIENTIFIC INSTRUMENTS,
vol. 23, no. 9, September 1952, pages 503-504,
New York, US; R.K. SWANK et al.: "A versatile
laboratory scintillation counter"**

(73) Proprietor: **Siemens Aktiengesellschaft Berlin
und München
Wittelsbacherplatz 2
D-8000 München 2 (DE)**

(72) Inventor: **Persyk, Dennis E.
28385 West Arch Drive
Barrington Illinois 60010 (US)**
Inventor: **Stoub, Everett W.
719 West Terrace
Villa Park Illinois 60181 (US)**

## Description

This invention relates to a method for replaceably connecting in a radiation detector a photomultiplier tube with a scintillation crystal assembly. The invention also relates to a radiation detector for which photomultiplier tubes, if desired or necessary can easily be replaced. Furthermore, the invention relates to a method and device for easily demounting a radiation detector a photomultiplier tube. A preferred field of application of the invention is a scintillation gamma camera as radiation detector, which comprises a plurality of photomultiplier tubes connected with a scintillation crystal assembly.

Conventional radiation detectors which comprise merely one photomultiplier tube normally make use of epoxy resin as adhesive for coupling the sole photomultiplier tube to the scintillation crystal assembly. Epoxy resin, however provides a rigid bond (see for example the brochure Harshaw Scintillation Phosphors D-4450 of the Harshaw Chemical Company, Crystal & Electronic Products Department, Solon, Ohio page 43, left column, lines 3 and 4). Due to this, in the case the sole photomultiplier tube becomes defective a decoupling and replacement of the latter one is not possible. Thus usually the complete radiation detector comprising the defective photomultiplier tube and the scintillaton crystal assembly has to be thrown away.

This procedure, however is not practicable for those radiation detectors which comprise a plurality of photomultiplier tubes, such as for example for a scintillation gamma camera. It would become too expensive to throw away a complete camera head merely for that reason that one sole photomultiplier tube had become defective. Due to this in conventional radiation detectors such as scintillation gamma cameras which comprise an assembly of photomultiplier tubes, use is made of an silicone compound with grease-like properties (e.g. silicone oil as for example described in section 2.1 of the brochure "Oken Synthetic Optical Crystals and Scintillation Phosphors" of Ohyo Koken Kogyo Co., Tokyo, Japan) as optical coupling medium for coupling the photomultiplier tubes with the cintillation crystal assembly. This conventional optical coupling compound, however remains semi-fluid and requires mechanical constraint and pressure loading to reduce the rate of spontaneous decoupling, as described for example in the U.S. Patents 3,723,735 and 4,280,051, where the photomultiplier tubes have to be spring biased. Even with extensive care, spontaneous deoupling occurs occassionally after installation of a detector unit.

According to the U.S. Patent 4,029,964 other light transparent adhesives, such as for example silicone rubber, have been practiced within a scintillation crystal assembly to couple a light conduction element such as a light pipe with a bilateral glass cover disc for the scintillation crystal. The light transparent silicone rubber is applied in liquid or gel form and is thereafter cured. However, to secure the photomultipier tubes in optical communication with the light conducting element of the scintillation crystal assembly again a conventional grease-like optical coupling compound is used to couple the photomultiplier tubes with the scintillation crystal assembly.

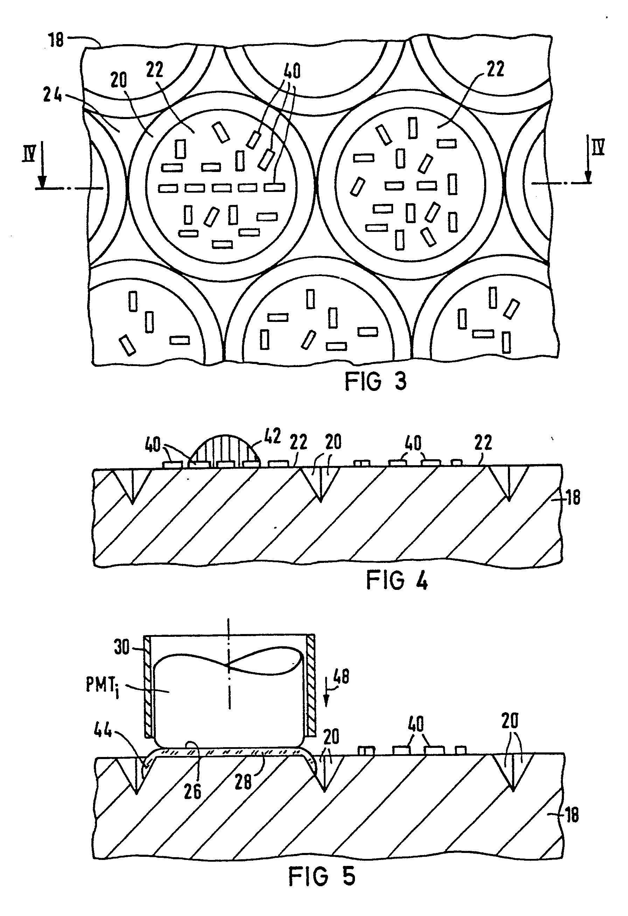

A radiation detector, which comprises two scintillation crystals which are bonded by means of a resilient silicone rubber compound to a photomultiplier tube is described in the U.S. Patent 4,323,778. However, as shown in Fig. 3 of this U.S. Patent both the scintillation crystals and the photomultiplier tube are completely embedded in the silicone rubber compounds. A decoupling of the photomultiplier tube is only possible by destroying of the complete assembly of photomultiplier tube and scintillation crystal. As namely described on page 1, lines 29 to 30 of the German laid-open specification 2,519,034 or as mentioned in col. 1, lines 42 and 47, 48 of the U.S. Patent 2,996,419 silicone rubber despite its casting elasticity has a very high adhesive strength. Thus a decoupling without destruction of photomultiplier tube and/or scintillation crystal assembly seemed to be unimaginable.

U.S. Patent 3,087,060 describes a scintillation counter, which comprises a photomultiplier tube the bottom of which is bonded by means of an extremely durable, transparent coupling cement to a scintillation crystal assembly. The Japanese Journal of Applied Physics, Vol. 10, No. 11 Nov. 1971, pages 1597 to 1598 depicts a silicone rubber light guide in a scintillation crystal assembly. A photomultiplier tube is bonded to said light guide by means of a silicone sealing cement, which is relatively non-elastic.

Summary of the invention
1. Objects

It is an object of this invention to provide an improved method for replaceably connecting in a radiation detector a photomultiplier tube with a scintillation crystal assembly.

It is another object of this invention to provide an improved radiation detector for which photomultiplier tubes if desired or necessary can easily be replaced.

2. Summary

According to this invention a method is provided for replaceably connecting in a radiation detector a photomultiplier tube with a scintillation crystal assembly, comprising the steps of:

a) applying solely between the bottom of the photomultiplier tube and the scintillation crystal assembly a silicone rubber compound adhesive which after curing will be light transparent and elastic; and

b) coupling the bottom of the photomultiplier tube and the scintillation crystal assembly together such that after the curing of the adhesive an elastic bond is provided between the bottom of the photomultiplier tube and scintillation crystal assembly which is stable enough to prevent spontaneous decoupling however which is elastic enough to be easily shearable by means of a shearing tool for the purpose of demounting the photomultiplier tube.

Also according to this invention a radiation detector is provided which comprises:

a) a scintillation crystal assembly; and

b) a photomultiplier tube having a bottom; wherein solely the bottom of the photomultiplier tube is bonded by means of a light transparent elastic silicon rubber compound adhesive to the scintillation crystal assembly.

The light transparent elastic adhesive is preferably a silicone rubber compound.

According to this invention use is made of an elastic light transparent adhesive to bond solely the bottom of a photomultiplier tube with a scintillation crystal assembly. The light transparent adhesive is strong enough to prevent spontaneous decoupling of the photomultiplier tube. Spring biasing of the multiplier tubes or other pressure loading, such as by means of a nest, plungers and rack is no longer necessary. This reduces mechanical complexity and cost and removes excess pressure loading onto the fragile scintillation crystal. The bond produced by that light transparent adhesive is also elastic enough to conform to differential expansion rates with temperatures, which the materials of photomultiplier tube and scintillation crystal assembly provide. Furthermore the bond is elastic enough to be easily shearable by means of a simple shearing tool, such as for example a thread, for the purpose of demounting the photomultiplier tube. The thread can be placed around the bond between photomultiplier tube and scintillation crystal assembly. Then the thread can be drawn such that it shears the bond.

In a preferred embodiment of this invention a silicone rubber compound is used as adhesive, which has a transmission of greater than 0.8 through 1 cm at 400 nm wavelengths and a moderate refractive index from about 1.4 to 1.6 at 400 nm. Such a silicone rubber adhesive is available for example from General Electric Company, Silicone Products Division, RTV Products Department, Waterford, New York 12188 under the name RTV 615 or RTV 655 (see General Electric's brochure CDS-1870A "RTV Silicone Rubber Product Data RTV 615, RTV 655 and RTV 670, High Strength Transport Silicone Rubber Compounds"). Other usable silicone rubber adhesives are for example the Sylgard[R] Silicone Elastomers 182 or 184 available from the Dow Corning Corporation, Midland, Michigan 48640 (see page 22 of Dow Corning's brochure "Materials for High Technology Applications").

The foregoing and other objects, features and advantages of the invention will be apparent from the following more particular description of preferred embodiments of the invention, as illustrated in the accompanying drawings.

Brief description of the drawings

In the drawings:

Fig. 1 shows a top view of a scintillation crystal assembly in a detector head, such as a scintillation gamma camera;

Fig. 2 shows the scintillation crystal assembly of Fig. 1 in a cross section;

Fig. 3 shows in an enlargement of a partial section of the scintillation crystal assembly of Fig. 1 the step of appling spacers and the step of applying an adhesive on the upper surface of the scintillation crystal assembly;

Fig. 4 shows the same steps as in Fig. 3 in a cross section of the enlargement;

Fig. 5 shows in the cross section of the enlargement the step of placing a photomultiplier tube and the step of placing a shield for the photomultiplier tube on the upper surface of the scintillation crystal assembly;

Fig. 6 shows in the cross section of the enlargement the step of coupling the photomultiplier tube with the upper surface of the scintillation crystal assembly by gravity action and the step of fixing the sheild by means of an adhesive ring;

Fig. 7 shows modified steps of applying spacers and an adhesive on the upper surface of the scintillation crystal assembly;

Fig. 8 shows the steps of placing a photomultiplier tube and a shield succeeding the steps of Fig. 7; and

Fig. 9 shows a simple method for decoupling a photomultiplier tube by means of a thread.

Detailed description of the preferred embodiment

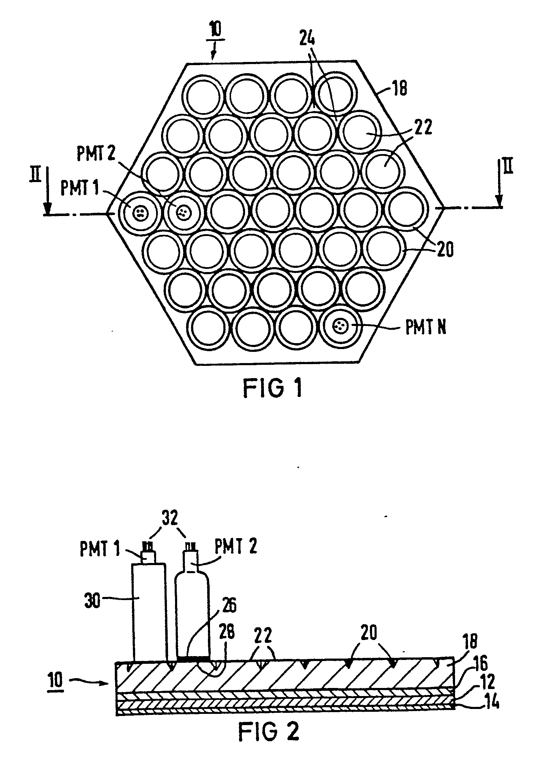

In Figs. 1 and 2 the scintillation crystal assembly 10, which has hexagonal shape, comprises a scintillation crystal 12 (e.g. NaI(T1)), an aluminum cover 14, a glass disc 16 and a light pipe 18 (e.g. acrylic plastic). The light pipe 18 is sculptured by means of circular grooves 20 into (e.g. 37) circular pads 22 and interstices 24. On each pad 22 a photomultiplier tube PMT1 to PMTN has to be placed. Thus a detector head (e.g. gamma camera head) will be created, which comprises for example a total of N=37 photomultiplier tubes. Merely three (of e.g. N=37) photomultiplier tubes are shown in Figs. 1 and 2 for illustrating purpose.

Each photomultiplier tube PMT1 to PNTN has a bottom 26 and is bonded with its bottom 26 to a corresponding pad 22 by means of an elastic light transparent silicone rubber compound according to this invention. In Fig. 2 the silicone rubber bond is indicted with the numeral 28. Also each photomultiplier tube PMT1 to PMTN is protected from external magnetic fields by a shield 30 of mumetal. The electrical wires 32 of each photomultiplier tube PNT1 to PMTN form a harness (not shown) for electric connection.

A method for replaceably bonding each photomultiplier tube PMT1 to PMTN to a corresponding pad 22 of the light pipe 18 according to this invention is described with respect to Figs. 3 to 6.

Fig. 3 shows in an enlargement of a partial section of the scintillation crystal assembly 10 of Fig. 1 pads 22 on each of which a plurality of small spacers 40 (each of them about 1 mm thick) have been applied in a first method step (after having prevously cleaned the pads with methylalcohol for example. The spacers 40 are determined for providing a uniformly thick (e.g. 1 mm) bond between the bottom of a photomultiplier tube and the corresponding pad.

The spacers 40 are casted of the same silicone rubber compound which will be used to form the bond. For this purpose at first a disc of the silicone rubber compound is casted, which has the desired later thickness of the bond. From the disc small pieces are cut which form the spacers.

This kind of spacers is advantageous, as they are produced of the same material as the adhesive of the later bond. Thus these spacers have exactly the same optical characteristics as the bond.

Fig. 4 shows the second step of the inventive methods. In this step a drop 42 of silicone rubber compound is applied to one of the pads 22. The silicone rubber compound is RTV 615 of General Electric. As described in the brochure Product Data CDS-1870 a ten parts of the A component and one part of the B component have previously been mixed and stirred in a container such as to produce a homogeneous mixture free of air bubbles. The drop 42 derives from this mixture. The drop 42 of silicone rubber compound has such a volume that after placing a photomultiplier tube $PMT_i$ on the pad and weighing down the photomultiplier tube by means of weight the drop of silicone rubber compound spreads across the pad leaving a thin ring of adhesive overtopping the bottom of the photomultiplier tube.

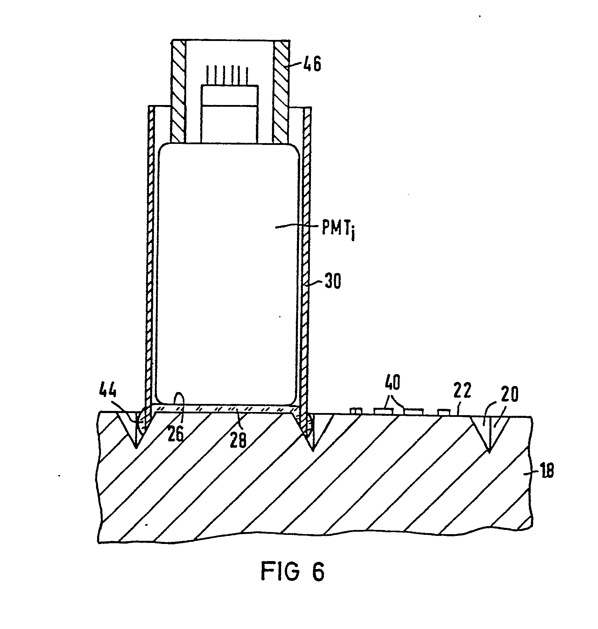

This ring produced by the third and fourth method steps of placing and weighing down the photomultiplier tube is indicated in Figs. 5 and 6 with the reference numeral 44.

The step of weighing down the photomultiplier tube $PMT_i$ is shown in more detail in Fig. 6. A weight 46 (for example lead cylinder) is positioned on the neck of the tube such that the bottom 26 of the photomultiplier tube $PMT_i$ is bonded by gravity action to the pad 22 of the light pipe 18 of the scintillation crystal assembly 10.

The adhesive ring 44 overtopping the bottom of the photomultiplier tube is provided for fixing the shield 30 for the tube in a fifth method step. Before curing of the silicone rubber compound the cylindrical shield 30 of mumetal is slipped over the photomultiplier tube $PMT_i$ in the direction of the arrow 48 as indicated in Fig. 5 and finally inserted with its lower end into the adhesive ring 44 as shown in Fig. 6. After the curing of the adhesive the shield is firmly positioned in the adhesive ring.

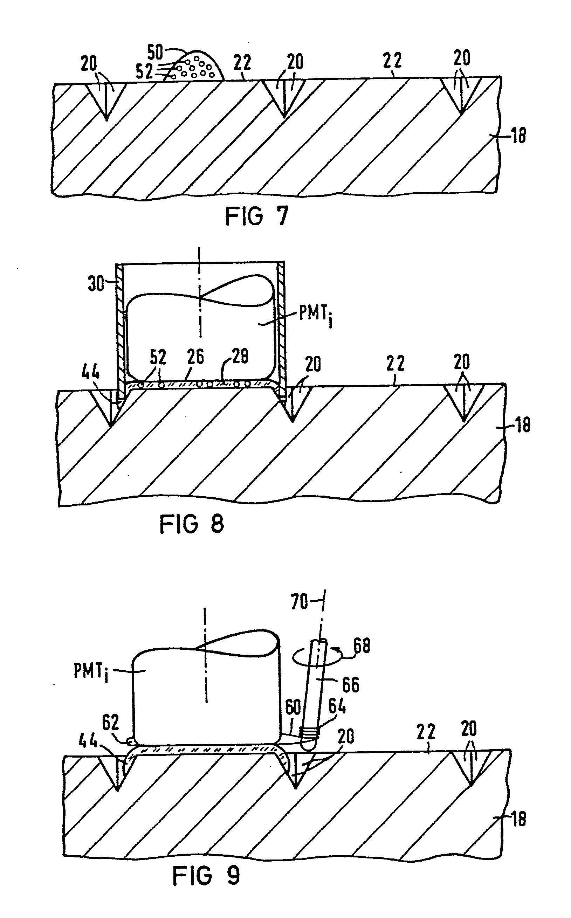

Figs. 7 and 8 indicate a modified version of applying spacers and adhesive to a pad. In this version small glass beads as spacers of about 1 mm diameter have previously been mixed with the silicone rubber compound. Such the adhesive drop 50 of Fig. 7 contains a plurality of fine glass beads 52 which spread together with the adhesive across the pad when placing the photomultiplier

tube $PMT_i$. The glass bead spacers have optical characteristics which are very similar to the optical characteristics of the silicone rubber compound forming the bond 28.

Fig. 9 shows a simple method for demounting a photomultiplier tube $PMT_i$ by means of a thread 60 (e.g. music wire of about 0.01 to 0.03 inch diameter). After having removed the shield 30 by pulling the shield in a direction contrary to the arrow 48 in Fig. 5 the thread 60 is placed around the bond 28 at the upper surface of the silicone rubber ring 44 such that it forms a noose 62. The thread ends 64 are wrapped around the lower end of a rod 66 as shown in Fig. 9. When twisting the rod 66 at its upper end in direction of the arrow 68 around its longitudinal axis 70 the thread continues to wind around the rod thereby making the loop smaller and shearing the bond. Thus a defective photomultiplier tube can easily be replaced. Having thus described the invention with particular reference to the preferred forms thereof, it will be obvious to those skilled in the art to which the invention pertains, after understanding the invention, that various changes and modifications may be made therein without departing from the spirit and scope of the invention as defined by the claims appended hereto.

**Claims**

1. A method for replacebly connecting in a radiation detector at least one photomultiplier tube (PMT 1 to PMT N) having a bottom (26) with a scintillation crystal assembly (10), by solely applying between the bottom of the photomultiplier tube and the scintillation crystal assembly an adhesive which after curing will be light transparent, characterized in that the bottom (26) of the photomultiplier tube (PMT 1 to PMT N) and the scintillation crystal assembly are coupled together by means of a silicone rubber compound as the adhesive, such that after the curing an elastic bond (28) is provided between the bottom of the photomultiplier tube and scintillation crystal assembly which is stable enough to prevent spontaneous decoupling however which is elastic enough to be easily shearable by means of a shearing tool for the purpose of demounting the photomultiplier tube.

2. A method according to claim 1, further comprising the step of applying spacers (40; 52) between the bottom of the photomultiplier tube and the scintillation crystal assembly such that the bond becomes uniformly thick.

3. A method according to claim 2, wherein the spacers are applied before applying the adhesive.

4. A method according to claim 2, wherein the spacers are
   a) mixed with the adhesive; and
   b) applied together with the adhesive.

5. A method according to claim 2, wherein the spacers (40) are cast of the same adhesive which is used to form the bond.

6. A method according to claim 5 comprising the steps of:

a) casting a disc of the adhesive, which has the desired thickness of the bond; and

b) cutting the disc into small pieces, which form the spacers (40).

7. A method according to claim 2, wherein small glass beads (52) are used as spacers, which beads have a diameter equal to the desired bond thickness.

8. A method according to one of the preceding claims 1 to 7, further comprising the steps of:

a) applying between the bottom (26) of the photomultiplier tube (PMT 1 to PMT N) and scintillation crystal assembly (10) the adhesive such that after coupling a thin ring (44) of adhesive overtopping the bottom of the photomultiplier tube is produced; and

b) inserting into the thin ring of overtopping adhesive before curing thereof a magnetic shield (30) for the photomultiplier tube.

9. A method according to one of the preceding claims 1 to 8, wherein the scintillation crystal assembly (10) comprises as an upper layer a light pipe (18), further comprising the steps of:

a) applying solely between the bottom (26) of the photomultiplier tube (PMT 1 to PMT N) and the light pipe (18) of the scintillation crystal assembly the adhesive; and

b) coupling the bottom of the photomultiplier tube and the light pipe together.

10. A method according to one of the preceding claims 1 to 9, further comprising the step of weighing down the photomultiplier tube by means of weight (46) after coupling such that the bottom of the photomultiplier tube is bonded by gravity action to the scintillation crystal assembly.

11. A method according to one of the preceding claims 1 to 10, further comprising the step of coupling a plurality of photomultiplier tubes (PMT 1 to PMT N) with a scintillation crystal assembly (10) by means of a silicone rubber compound.

12. A radiation detector, comprising a scintillation crystal assembly (10) and at least one photomultiplier tube (PMT 1 to PMT N) having a bottom (26) wherein solely the bottom (26) of the photomultiplier tube is bonded by means of a light transparent adhesive to the scintillation crystal assembly, characterised in that the adhesive is a silicone rubber compound, which after curing provides for an elastic bond (28), which is stable enough to prevent spontaneous decoupling however which is elastic enough to be easily shearable by means of a shearing tool.

13. A radiation detector according to claim 12, comprising a plurality of photomultiplier tubes (PMT 1 to PMT N) the bottom (26) of each of these photomultiplier tubes is bonded by means of the adhesive to the scintillation crystal assembly (10).

14. A radiation detector according to claim 12 or 13, further comprising:

a) magnetic shield (30) for the photomultiplier tube; and

b) a ring (44) of adhesive overtopping the bottom (26) of the photomultiplier tube; wherein said magnetic shield is fixed in said ring of adhesive.

15. A radiation detector according to one of the preceding claims 12 to 14, wherein

a) the scintillation crystal assembly (10) comprises as an upper layer a light pipe (18); and

b) the bottom (26) of the photomultiplier tube is coupled to the light pipe by means of the adhesive.

16. A radiation detector according to claim 15, further comprising:

a) a light pipe (18) which is sculptured into pads (22) and grooves (20) each of the pads having a pad area; and

b) a plurality of photomultiplier tubes (PMT 1 to PMT N) each of them having a bottom (26) with a bottom area being at least slightly larger than the pad area;

wherein each of the photomultiplier tubes is coupled by means of the adhesive to an associated pad of the light pipe.

**Patentansprüche**

1. Verfahren zur lösbaren Befestigung wenigstes einer Photovervielfacherröhre (PMT 1 bis PMT N), die einen Boden (26) aufweist, an einer Szintillationskristallanordnung (10) in einem Strahlungsdetektor, idem ein Kleber, der nach dem Aushärten lichtdurchlässig ist, ausschließlich zwischen dem Boden der Photovervielfacherröhre und der Szintillationskristallanordnung aufgetragen wird, dadurch gekennzeichnet, daß der Boden (26) der Photovervielfacherröchre (PMT 1 bis PMT N) und die Szintilationskristallanordnung derart mittels eines Silikon-Kautschuk-Gemischs als Kleber miteinander verbunden sind, daß nach dem Aushärten eine elastische Verbindung (28) zwischen dem Boden der Photovervielfacherröhre und der Szintillationskristallanordnung erzeugt wird, die fest genug ist, daß sie sich nicht ungewollt löst, aber doch elastisch genug ist, daß sie mittels eines Trennwerkzeugs zum Zwecke der Auswechslung der Photovervielfacherröhre leicht getrennt werden kann.

2. Verfahren nach Anspruch 1, das außerdem den Verfahrensschritt umfaßt, daß Zwischenlagen (40; 52) zwischen den Boden der Photovervielfacherröhre und die Szintillationskristallanordnung derart gelegt werden, daß die Verbindung gleichmäßig dick wird.

3. Verfahren nach Anspruch 2, wobei die Zwischenlagen aufgelegt werden, bevor der Kleber aufgetragen wird.

4. Verfahren nach Anspruch 2, wobei die Zwischenlagen

a) mit dem Kleber vermischt werden; und

b) zusammen mit dem Kleber aufgetragen werden.

5. Verfahren nach Anspruch 2, wobei die Zwischenlagen (40) aus demselben Kleber, der für die Verbindung verwendet wird, gegossen werden.

6. Verfahren nach Anspruch 5, das folgende Schritte umfaßt:

a) eine Scheibe, die die gewünschte Dicke der Verbindung aufweist, wird aus dem Kleber gegossen; und

b) die Scheibe wird in kleine Stücke, die die Zwischenlagen (40) bilden, geschnitten.

7. Verfahren nach Anspruch 2, wobei kleine Glasperlen (52), die Durchmesser gleich der gewünschten Dlcke der Verbindung aufweisen, als Zwischenlagen benutzt werden.

8. Verfahren nach einem der Ansprüche 1 bis 7, das auch noch folgende Schritte umfaßt:

a) der Kleber wird derart zwischen dem Boden (26) der Photovervielfacherröhre (PMT 1 bis PMT N) und der Szintillationskristallanordnung (10) aufgetragen, daß nach dem Verbinden ein dünner klebering (44), der über den Boden der Photovervielfacherröhre hinausragt, entsteht: und

b) ein Magnetschirm (30) für die Photovervielfacherröhre wird in den hinausragenden dünnen Klebering gesteckt, bevor dieser Ring aushärtet.

9. Verfahren nach einem der Ansprüche 1 bis 8, wobei die Szintillationskristallanordnung (10) als obere Schicht einen Lichtleiter (18) aufweist, das außerdem folgende Schritte umfaßt:

a) der Kleber wird ausschließlich zwischen dem Boden (26) der Photovervielfacherröhre (PMT 1 bis PMT N) und dem Lichtleiter (18) der Szintillationskristallanordnung aufgetragen; und

b) der Boden der Photovervielfacherröhre und der Lichtleiter werden aneinander gefügt.

10. Verfahren nach einem der Ansprüche 1 bis 9, das auch noch den Verfahrensschritt umfaßt, daß die Photovervielfacherröhre nach dem Verbinden derart mit einem Gewicht (46) belastet wird, daß der Boden der Photovervielfacherröhre mittels Schwerkraft an die Szintillationskristallanordnung gebunden wird.

11. Verfahren nach einem der Ansprüche 1 bis 10, das außerdem den Verfahrensschritt umfaßt, daß eine Mehrzahl an Photovervielfacherröhren (PMT 1 bis PMT N) mittels eines Silikon-Kautschuk-Gemischs mit einer Szintillationskristallanordnung (10) verbunden werden.

12. Strahlungsdetektor, der eine Szintillationskristallanordnung (10) und wenigstens eine Photovervielfacherröhre (PMT 1 bis PMT N) mit einem Boden (26) umfaßt, wobei ausschließlich der Boden (26) der Photovervielfacherröhre mittels eines lichtdurchlässigen Klebers mit der Szintillationskristallanordnung verbunden ist, dadurch gekennzeichnet, daß der Kleber aus einem Silikon-Kautschuk-gemisch besteht, das nach dem Aushärten eine elastische Verbindung erzeugt, die fest genug ist, daß sie sich nicht ungewollt löst, aber doch elastisch genug ist, daß sie mittels eines Trennwerkzeugs leicht getrennt werden kann.

13. Strahlungsdetektor nach Anspruch 12, der eine Mehrzahle von Photovervielfacherröhren (PMT 1 bis PMT N) imfaßt, wobei der Boden (26) jeder dieser Photovervielfacherröher mittels des Klebers mit der Szintillationskristallanordnung (10) verbunden ist.

14. Strahlungsdetektor nach Anspruch 12 oder 13, der außerdem

a) einen Magnetschirm (30) für die Photovervielfacherröhre; und

b) einen klebering (44), der über den Boden (26) der Photovervielfacherröhre hinausragt, umfaßt, wobei der Magnetischirm im Klebering befestigt ist.

15. Strahlungsdetektor nach einem der Ansprüche 12 bis 14, wobei

a) die Szintillationskristallanordnung (10) als obere Schicht einen Lichtleiter (18) aufweist; und

b) der Boden (26) der Photovervielfacherröhre mittels des Klebers an die Lichtröhre gefügt ist.

16. Strahlungsdetektor nach Anspruch 15, der außerdem

a) einen Lichtleiter (18) umfaßt, der Stege und Rillen aufweist, wobei jeder Steg eine Stegstirnfläche hat; und

b) eine Mehrzahl von Photovervielfacherröhren (PMT 1 bis PMT N) beinhaltet, wobei jede Röhre einen Boden (26) mit einer Bodenfläche, die mindestens leicht größer als die Stegstirnfläche ist, aufweist, wobei jede Photovervielfacherröhre mittels des Klebers mit einem zugeordneten Steg des Lichtleiters verbunden ist.

**Revendications**

1. Un procédé pour accoupler de façon remplaçable dans et détecteur de rayonnement au moins un tube photomultiplicateur (PMT 1 à PMT N) ayant un fond (26), et une structure de cristal scintillateur (10), en appliquant seulement entre le fond du tube photomultiplicateur et la structure de cristal scintillateur un adhésif qui sera transparent après vulcanisation, caracterisé en ce que le fond (26) du tube photomultiplicateur (PMT 1 à PMT N) et la structure de cristal scintillateur sont mutuellement accouplés par l'emploi, à titre d'adhésif, d'un composée consistant en caoutchouc aux silicones, de façon à obtenir après la vulcanisation une liaison élastique (28) entre le fond du tube photomultiplicateur et la structure de cristal scintillateur, suffisamment stable pour empêcher une séparation spontanée, mais cependant suffisamment élastique pour pouvoir être coupée aisément au moyen d'un outil coupant, dans le but de démonter le tube photomultiplicateur.

2. Un procédé selon la revendication 1, comprenant en outre l'étape qui consiste à appliquer des entretoises (40; 52) entre le fond du tube photomultiplicateur et la structure de cristal scintillateur, de façon que la liaison prenne une épaisseur uniforme.

3. Un procédé selon la revendication 2, dans lequel les entretoises sont appliquées avant d'appliquer l'adhésif.

4. Un procédé selon la revendication 2, dans lequel les entretoises sont;

a) mélangées avec l'adhésif; et

b) appliquées en même temps que l'adhésif.

5. Un procédé selon la revendication 2, dans lequel les entretoises (40) sont moulées avec l'adhésif qu'on utilise également pour former la liaison.

6. Un procédé selon la revendication 5, comprenant les étapes suivantes:

a) on moule un disque de l'adhésif, ayant l'épaisseur désirée pour la liaison; et

b) on découpe le disque en petits morceaux qui forment les entretoises (40).

7. Un procédé selon la revendication 2, dans lequel on utilise en tant qu'entretoises de petites perles de verre (52), et ces perles ont un diamètre égal à l'épaisseur désirée pour la liaison.

8. Un procédé selon l'une quelconque des revendications 1 à 7 précédentes, comprenant en outre les étapes suivantes:

a) on applique l'adhésif entre le fond (26) du tube photomultiplicateur (PMT 1 à PMT N) et la structure de cristal scintillateur (10), de façon qu'après l'accouplement il se forme un anneau mince (44) d'adhésif entourant le fond du tube photomultiplicateur; et

b) on introduit un blindage magnétique (30) pour le tube photomultiplicateur dans l'anneau mince d'adhésif entourant le fond du tube, avant la vulcanisation de l'adhésif.

9. Un procédé selon l'une quelconque des revendications 1 à 8 précédentes, dans lequel la structure de cristal scintillateur (10) comprend un guide de lumière (18) constituant une couche supérieure, comprenant en outre les étapes suivantes:

a) on applique l'adhésif exclusivement entre le fond (26) du tube photomultiplicateur (PMT 1 à PMT N) et le guide de lumière (18) de la structure de cristal scintillateur; et

b) on accouple ensemble le fond du tube photomultiplicateur et le guide de lumière.

10. Un procédé selon l'une quelconque des revendications 1 à 9 précédentes, comprenant en outre l'étape qui consiste à exercer sur le tube photomultiplicateur une force dirigée vers le bas, au moyen d'un poids (46), après l'accouplement, de façon que le fond du tube photomultiplicateur soit fixé à la structure de cristal scintillateur par l'action de la gravité.

11. Un procédé selon l'une quelconque des revendications 1 à 10 précédentes, comprenant en outre l'étape qui consiste à accoupler un ensemble de tubes photomultiplicateurs (PMT 1 à PMT N) avec une structure de cristal scintillateur (10), au moyen d'un composé consistant en caoutchouc aux silicones.

12. Un détecteur de rayonnement, comprenant une structure de cristal scintillateur (10) et au moins un tube photomultiplicateur (PMT 1 à PMT N) ayant un fond (26), dans lequel seul le fond (26) du tube photomultiplicateur est fixé à la structure de cristal scintillateur au moyen d'un adhésif transparent, caractérisé en ce que l'adhésif est un composé consistant en caoutchouc aux silicones qui aprés vulcanisation, établit une liaison élastique (28) qui est suffisamment stable pour empêcher une séparation spontanée, mais qui est cependant suffisamment élastique pour pouvoit être coupée aisément au moyen d'un outil coupant.

13. Un détecteur de rayonnement selon la revendication 12, comprenant un ensemble de tubes photomultiplicateurs (PMT 1 à PMT N), dans lequel le fond (26) de chacun de ces tubes photomultiplicateurs est fixé au moyen de l'adhésif à la structure de cristal scintillateur (10).

14. Un détecteur de rayonnement selon la revendication 12 ou 13, comprenant en outre:

a) un blindage magnétique (30) pour le tube photomultiplicateur; et

b) un anneau (44) d'adhésif entourant le fond (26) du tube photomultiplicateur;

dans lequel le blindage magnétique est fixé dans l'anneau d'adhésif.

15. Un détecteur de rayonnement selon l'une quelconque des revendications 12 à 14 précédentes, dans lequel

a) la structure de cristal scintillateur (10) comprend un guide de lumière (18) constituant une couche supérieure; et

b) le fond (26) du tube photomultiplicateur est accouplé au guide de lumière au moyen de l'adhésif.

16. Un détecteur de rayonnement selon la revendication 15, comprenant en outre:

a) un guide de lumière (18) qui est "sculpté" de façon à présenter des plots (22) et des rainures (20), chacun des plots ayant une aire de plot; et

b) un ensemble de tubes photomultiplicateurs (PMT 1 à PMT N), chacun d'eux comportant un fond (26), avec une aire de fond au moins légèrement supérieure à l'aire de plot;

dans lequel chacun des tubes photomultiplicateurs est accouplé au moyen de l'adhésif à un plot associé du guide de lumière.

FIG 1

FIG 2

FIG 3

FIG 4

FIG 5

2

FIG 6

0 129 682

FIG 7

FIG 8

FIG 9

4